# FASCICULE DE BREVET EUROPEEN

(11) **EP 1 198 362 B1**
(45) Date de publication et mention de la délivrance du brevet: **14.01.2004**
(21) Numéro de dépôt: 00953245.8
(22) Date de dépôt: 13.07.2000
(51) Int. Cl.: B60J 7/02

(54) **SYSTEME DE TOIT RETRACTABLE**
VERSENKBARES DACHSYSTEM
RETRACTABLE ROOF SYSTEM

(30) Priorité: 05.08.1999 FR 9910204
(43) Date de publication de la demande: 24.04.2002
(73) Titulaire: Société Européenne de Brevets Automobiles, 75011 Paris (FR)
(72) Inventeur: GUILLEZ, Jean-Marc, F-79140 Cerizay (FR); QUEVEAU, Paul, F-79140 Cerizay (FR); QUEVEAU, Gérard, F-79140 Cerizay (FR)
(74) Mandataire: Rémont, Claude
(86) Numéro de dépôt international: PCT/FR2000/002053
(87) Numéro de publication internationale: WO 2001/010659

(56) Documents cités:
- FR-A- 2 694 245

## Description

La présente invention concerne un système de toit rétractable pour structure fixe ou mobile notamment pour véhicule, par exemple un véhicule ou un bateau.

On connaît, d'après le FR-B-2 694 245 au nom de la Demanderesse, un système de toit rétractable pour véhicule constitué d'au moins deux panneaux rigides, respectivement un premier panneau avant et un second panneau central, solidarisés l'un à l'autre par des moyens coulissants agencés de manière telle que le panneau avant est mobile entre une position fermée, dans laquelle il recouvre l'habitacle, et une position ouverte dans laquelle il est, après coulissement vers l'arrière, superposé au panneau central, le panneau central étant monté de manière pivotante sur des bras latéraux fixés chacun à une extrémité au panneau central et à l'autre extrémité à un point d'articulation fixé au châssis du véhicule, le panneau central étant adapté à pivoter, en entraînant le panneau avant qui lui est superposé, entre une position fermée dans laquelle il recouvre l'habitacle, et une position ouverte dans laquelle le panneau avant et le panneau central sont logés, dans leur position superposée, sensiblement à la verticale derrière l'habitacle du véhicule, les moyens coulissants comprenant une glissière avant solidaire du panneau avant, une glissière arrière solidaire du panneau central, et une glissière intermédiaire reliée de manière coulissante par l'intermédiaire de galets et de gorges à la fois à la glissière avant et à la glissière arrière, des moyens d'entraînement étant prévus pour faire coulisser la glissière avant par rapport à la glissière intermédiaire, d'une part et la glissière intermédiaire par rapport à la glissière arrière, d'autre part.

La présente invention a pour but de remédier aux inconvénients du système précité et de proposer des perfectionnements de ce système en particulier en relation avec les glissières autorisant une réalisation simple et fiable pouvant être adaptée à différents types de carrosseries de véhicules ou à différents types de structure fixe ou mobile.

Suivant la présente invention, le système de toit rétractable du type précité est caractérisé en ce que le panneau avant est relié à la glissière avant par une première patte solidaire de l'avant du panneau et fixée de manière pivotante à l'avant de la glissière avant, et porte à son extrémité arrière une seconde patte solidaire dudit panneau avant et portant un axe reçu de manière coulissante dans une gorge d'une glissière de guidage portée par le. panneau central et ouverte vers le haut, et en ce que des moyens d'entraînement sont prévus pour faire coulisser, de préférence en même temps et à la même vitesse relative, la glissière avant par rapport à la glissière intermédiaire, d'une part, et la glissière intermédiaire par rapport à la glissière centrale, d'autre part, les première et seconde pattes, les glissières avant, intermédiaire et arrière et la glissière de guidage étant conformées pour faire coulisser le panneau avant vers l'arrière par dessus le panneau central.

Ainsi, la première patte est entraînée par la glissière avant dans son coulissement vers l'arrière, et entraîne le panneau avant dans ce mouvement de coulissement.

De même, la seconde patte est entraînée vers l'arrière par le panneau avant et coulisse dans la glissière de guidage qui est ouverte vers le haut, en guidant l'arrière du panneau avant au-dessus du panneau central.

On a ainsi un système de toit rétractable constitué d'éléments simples et fiables en nombres réduits qui permettent un fonctionnement précis et fiable du système de toit rétractable selon la présente invention.

D'autres particularités et avantages de la présente invention apparaîtront dans la description détaillée ci-après :

Aux dessins annexés, donnés uniquement à titre d'exemples non limitatifs:
- la figure 1 est une vue schématique en perspective illustrant l'agencement des trois glissières du côté droit d'un système de toit rétractable selon un mode de réalisation de la présente invention ;
- la figure 2 est une vue de dessus des trois glissières de la figure 1 ;
- la figure 3 est une vue schématique en coupe selon III-III à la figure 1 ;
- la figure 4 est une vue schématique en coupe selon IV-IV à la figure 1 ;
- la figure 5 est une vue schématique en coupe selon V-V à la figure 1, les deux panneaux étant représentés dans leur position superposée;
- la figure 6 est un schéma en perspective d'un mode de réalisation des moyens d'entraînement des glissières situées à gauche du véhicule selon un mode de réalisation de la présente invention;
- la figure 7 est une vue en coupe longitudinale illustrant les moyens d'entraînement des glissières représentées à la figure 1, les panneaux avant et central étant représentés dans leur position fermée ;
- la figure 8 est une vue schématique en coupe selon VIII-VIII à la figure 6 ;
- la figure 9 est une vue schématique en perspective illustrant un mode de réalisation des moyens de blocage du panneau central sur le châssis du véhicule ;
- la figure 10 est une vue en coupe selon X-X à la figure 9 ;
- la figure 11 est une vue schématique semblable à la figure 7 illustrant un mode de réalisation des moyens de verrouillage du panneau avant sur le panneau central et sur le châssis du véhicule ;
- la figure 12 est une vue schématique en perspective illustrant un mode de réalisation de la première patte à l'avant du panneau avant;
- la figure 13 est un schéma en élévation illustrant un mode de réalisation de la seconde patte à l'arrière du panneau avant;
- la figure 14 est une vue schématique en coupe longitudinale d'un premier type de carrosserie de véhicule équipé d'un système de toit rétractable selon un mode de réalisation de la présente invention ;
- la figure 15 est une vue semblable à la figure 14 illustrant un autre type de carrosserie de véhicule équipé du même système de toit rétractable ;
- la figure 16 est une vue semblable à la figure 14 d'un autre type de carrosserie de véhicule équipé du même système de toit rétractable ;
- la figure 17 est une vue schématique en perspective d'un autre type de carrosserie de véhicule équipé d'un système de toit rétractable selon un autre mode de réalisation de la présente invention ;
- la figure 18 est une vue semblable à la figure 17 d'un autre type de carrosserie de véhicule équipé du même système de toit rétractable ;
- la figure 19 est une vue semblable à la figure 17 d'un autre type de carrosserie de véhicule équipé du même système de toit rétractable ;
- la figure 20 est une vue semblable à la figure 14 illustrant le profil courbe des glissières avant, intermédiaire et arrière.

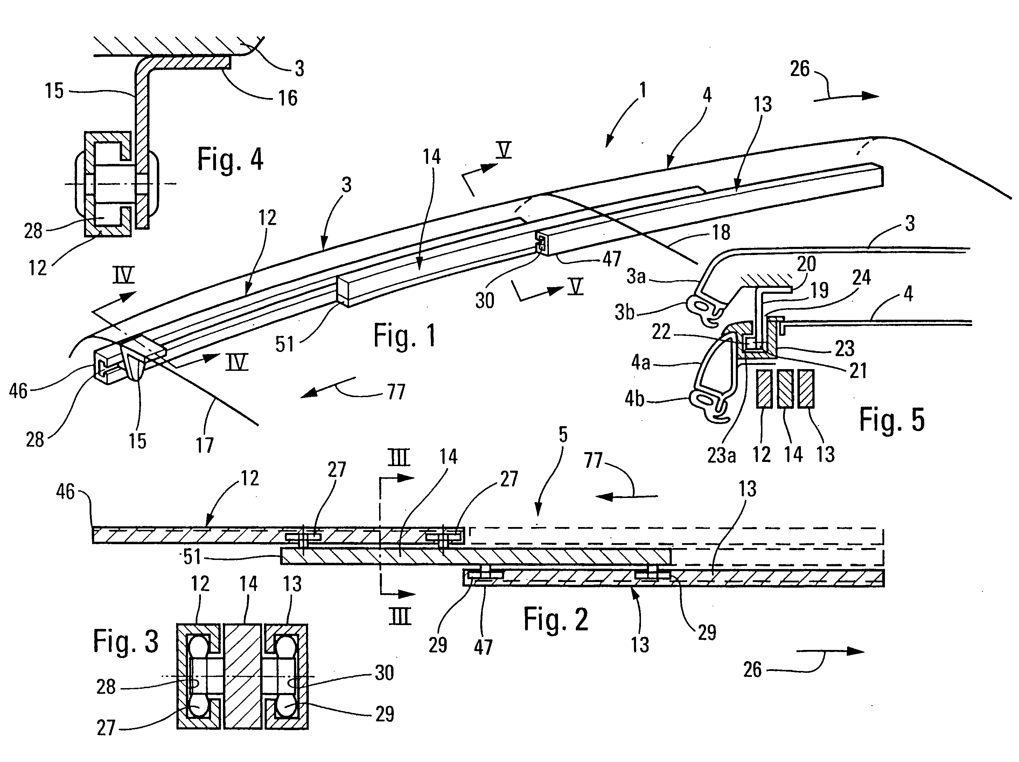

Dans le mode de réalisation représenté aux figures 1 à 8, 14 à 16 et 20, le système de toit rétractable 1 pour véhicule 2 est constitué d'au moins deux panneaux rigides, respectivement un premier panneau avant 3 et un second panneau central 4 solidarisés l'un à l'autre par des moyens coulissants 5.

Les moyens coulissants 5 sont agencés de manière telle que le panneau avant 3 est mobile entre une position fermée, schématisée aux figures 1, 7, 14 à 16 et 20, dans laquelle il recouvre l'habitacle 6, et une position ouverte dans laquelle il est, après coulissement vers l'arrière, superposé au panneau central 4, comme schématisé à la figure 5.

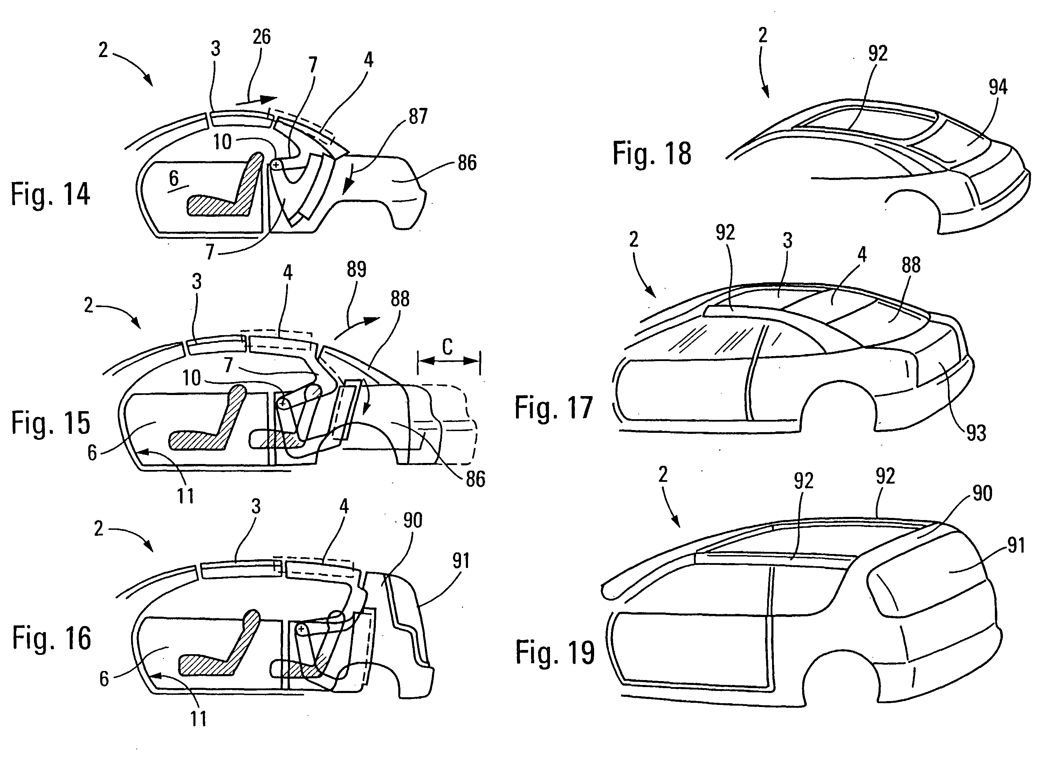

Le panneau central 4 est monté de manière pivotante sur des bras latéraux 7 schématisés aux figures 14 à 16 et 20, fixés chacun à une extrémité supérieure 8 au panneau central 4 et à l'autre extrémité inférieure 9 à un point d'articulation 10 fixé au châssis 11 du véhicule 2.

Ainsi, le second panneau central 4 est adapté à pivoter, comme schématisé aux figures 14 à 16, en entraînant le panneau avant 3 qui lui est superposé, entre une position fermée, dans laquelle il recouvre l'habitacle 6, et une position ouverte dans laquelle le panneau avant 3 et le panneau central 4 sont logés, dans leur position superposée, sensiblement à la verticale derrière l'habitacle 6 du véhicule 2.

Les moyens coulissants 5 comprennent une glissière avant 12 solidaire du panneau avant 3, une glissière arrière 13 solidaire du panneau central 4, et une glissière intermédiaire 14 reliée de manière coulissante par l'intermédiaire de galets et de gorges, qui seront détaillés plus loin, à la fois à la glissière avant et à la glissière arrière 13.

Dans l'exemple représenté, le panneau avant 3 est relié à la glissière avant 12 par une première patte 15 fixée rigidement à son extrémité supérieure 16 à l'avant 17 du panneau avant 3.

Le panneau avant 3 porte, à son extrémité arrière 18, une seconde patte 19 montée, à son extrémité supérieure 20, solidaire du panneau avant 3, fixée à celui-ci et portant, à son extrémité inférieure 21, un axe 22 reçu de manière coulissante dans une gorge 23a d'une glissière de guidage 23 portée par le panneau central 4 et ouverte vers le haut par une rainure 24 pour le passage de la patte 19.

Des moyens d'entraînement 25 sont prévus pour faire coulisser, de préférence en même temps et à la même vitesse relative, la glissière avant 12 par rapport à la glissière intermédiaire 14, d'une part, et la glissière intermédiaire 14 par rapport à la glissière arrière 13, d'autre part.

De ce fait, la glissière avant 12 se déplace par rapport à la glissière arrière 13 à une vitesse double de celle de la glissière intermédiaire 14, de sorte que les trois glissières se retrouvent côte à côte dans leur position arrière schématisée en tirets à la figure 2.

La première patte 15 et la seconde patte 19, les glissières avant 12, arrière 13 et intermédiaire 14, et la glissière de guidage 23 sont conformées pour faire coulisser le panneau avant 3 dans le sens 26 vers l'arrière du véhicule 22 par dessus le panneau central 4.

Tous les éléments décrits ci-dessus en référence au côté droit du véhicule 2 sont reproduits de manière symétrique sur le côté gauche dudit véhicule.

Comme schématisé à la figure 2, les glissières avant 12, intermédiaire, 14 et arrière 13 ont sensiblement la même longueur, la glissière avant étant disposée, dans l'exemple représenté, transversalement vers l'extérieur du véhicule par rapport à la glissière intermédiaire 14 qui est elle-même disposée transversalement vers l'extérieur par rapport à la glissière arrière 13.

Dans cet exemple, la glissière intermédiaire 14 porte, du côté extérieur, deux galets 27 situés dans sa moitié avant et adaptés à rouler dans une gorge 28 de la glissière avant 12.

De même, la glissière intermédiaire 14 porte, du côté vers l'intérieur du véhicule, deux galets 29 situés dans sa moitié arrière et adaptés à rouler dans une gorge 30 de la glissière arrière 13.

Ainsi, dans la position fermée du toit rétractable 1 représentée aux figures 1 et 2, la glissière avant 12 fait saillie vers l'avant de la moitié de sa longueur par rapport à la glissière intermédiaire 14, et cette dernière fait saillie vers l'avant sur la moitié de sa longueur par rapport à la glissière arrière 13.

La réalisation représentée à la figure 5 correspond à la structure de toit rétractable complet décrite ci-dessous en référence aux figures 14 à 16.

Chaque panneau 3, 4 comprend les renforts latéraux 3a, 4a et les joints 3b, 4b correspondants, ainsi que les renforts et joints transversaux (non représentés).

Les trois glissières 12 à 14 sont situées du côté intérieur du renfort latéral 4a correspondant, sensiblement sous la glissière de guidage 23 correspondante.

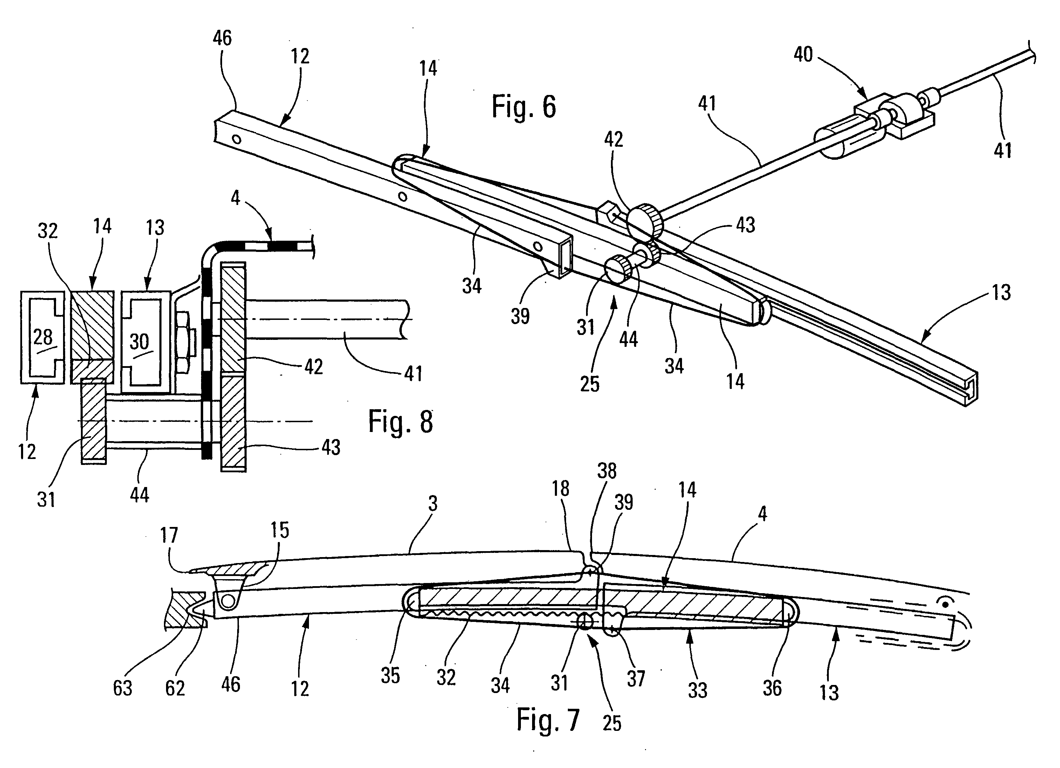

Dans le mode de réalisation schématisé aux figures 6 à 8, les moyens d'entraînement 25 comprennent un pignon moteur 31 entraînant une crémaillère 32 portée par la glissière intermédiaire 14.

Les moyens d'entraînement 25 comprennent également, de préférence, un dispositif 33, porté par la glissière intermédiaire 14, comprenant un câble ou une chaîne sans fin 34 s'enroulant entre deux patins 35, 36 fixés aux deux extrémités longitudinales de la glissière intermédiaire 14, et dont deux points sensiblement opposés sont fixés, l'un, 37, à l'avant du panneau central 4, l'autre, 39, à l'extrémité arrière 18 du panneau avant 3.

Dans l'exemple représenté aux figures 6 à 8, un moteur 40 entraîne deux demi-arbres 41 portant chacun à leur extrémité libre un premier pignon 42 en prise avec un second pignon 43 fixé sur un axe 44 entraînant le pignon moteur 31 en prise avec la crémaillère 32.

Lorsque le moteur 40 tourne, dans le sens de l'ouverture du toit à partir de la position fermée de celui-ci représentée à la figure 7, le pignon moteur 31 entraîne la crémaillère 32 et la glissière intermédiaire 14 dans le sens 26 vers l'arrière. Le câble sans fin 34, dont le point 37 est fixé à l'avant du panneau central 4, tourne autour des patins 35, 36 et entraîne dans le sens 26 vers l'arrière le point 39 fixé à l'arrière 18 du panneau avant 3.

Les phénomènes inverses se produisent dans le sens de la fermeture du panneau avant 3 par rapport au panneau central 4.

Comme schématisé à la figure 20, les glissières 12, 13, 14 ont un profil circulaire de même rayon, qui est de préférence sensiblement plus petit que le rayon moyen du toit 1 dans sa position fermée.

Ainsi, la partie avant 17 du panneau avant 3, qui est située à une hauteur prédéterminée au-dessus de l'extrémité avant 46 de la glissière avant 12, se trouvera, dans la position ouverte du panneau avant 3, à la même hauteur au-dessus de l'extrémité avant 47 de la glissière arrière 13, et donc au-dessus de l'extrémité avant 38 du panneau central 4.

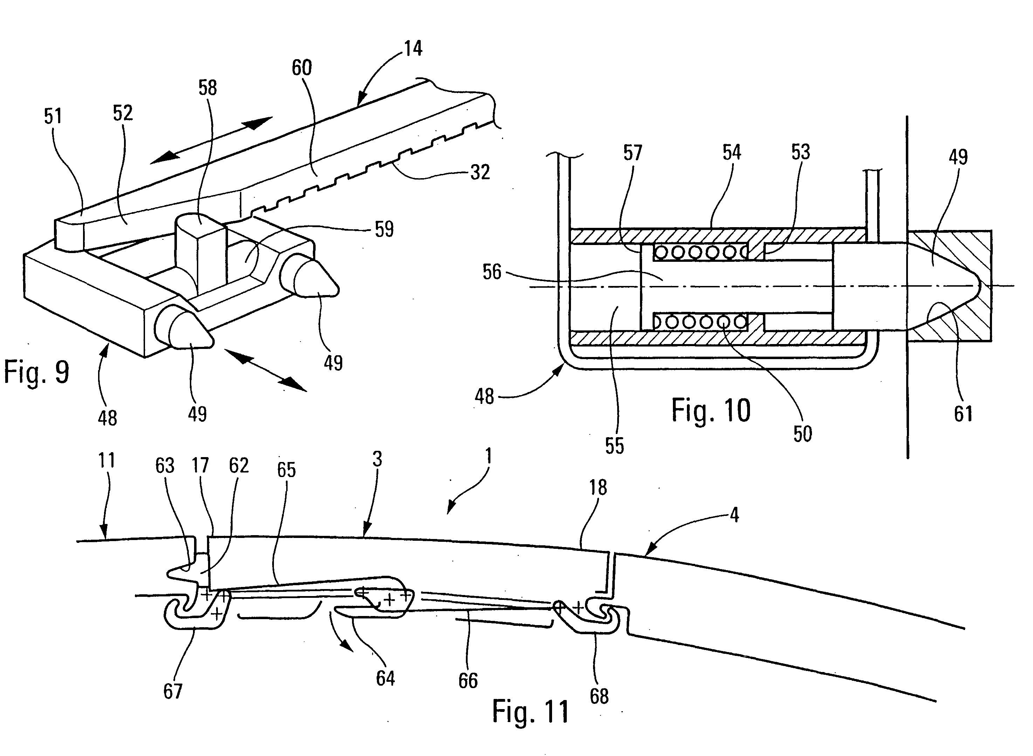

Dans le mode de réalisation des figures 9 et 10, le panneau central 4 comporte des moyens de verrouillage 48 pour verrouiller le panneau central 4 au châssis 11 du véhicule 2.

Dans cet exemple, les moyens de verrouillage 48 comprennent au moins un doigt de verrouillage 49, deux doigts 49 dans l'exemple représenté.

Chaque doigt de verrouillage 49 est pressé dans sa position verrouillée sortie transversalement vers l'extérieur du véhicule, pour interdire le pivotement du panneau central 4 si le panneau avant 3 n'est pas dans sa position ouverte, superposée au panneau central 4.

Dans cet exemple, chaque doigt 49 est pressé par la glissière intermédiaire 14 contre l'action d'un ressort de rappel 50.

La glissière intermédiaire 14 comporte ici, à son extrémité avant 51, une découpe en biseau 52 autorisant le retrait du doigt 49 vers l'intérieur du véhicule hors de sa position de verrouillage représentée aux figures, lorsque la glissière intermédiaire 14 est dans sa position vers l'arrière dans laquelle le panneau avant 3 est dans sa position ouverte superposée au panneau central 4.

Comme schématisé à la figure 10, le ressort 50 est coincé entre une collerette annulaire 53 de la paroi 54 définissant le logement 55 qui reçoit le corps 56 de chaque doigt 49, et une collerette extérieure 57 ménagée à l'extrémité arrière du corps 56.

Un levier 58 fixé au support 59 des doigts 49 est poussé par la face latérale extérieure 60 de la glissière intermédiaire 14 pour amener chaque doigt 49 en prise dans une gâche 61 correspondante du châssis 11.

Lorsque la glissière intermédiaire 14 arrive à proximité de sa position arrière, le levier 58 vient en contact avec la découpe en biseau 52, ce qui autorise le retrait des doigts 49 hors des gâches 61 lorsque la glissière intermédiaire est arrivée dans sa position arrière.

Dans l'exemple schématisé à la figure 7, qui correspond au mode de réalisation décrit ci-dessous en référence aux figures 17 à 19, l'extrémité avant 17 du panneau avant 3 comporte un doigt 62 s'engageant en fin de course dans une gâche 63 fixée au châssis 11, pour verrouiller le panneau avant 3 sur ledit châssis 11.

Dans le cas d'une ouverture totale du toit complet schématisé aux figures 14 à 16, une poignée 64, actionnée manuellement ou électriquement, du type grenouillère, est prévue sur ledit panneau avant 3.

La poignée 64 est reliée, par l'intermédiaire de deux câbles ou arbres 65, 66, à deux crochets 67, 68 dont la rotation assure le verrouillage du panneau avant 3 respectivement par rapport au châssis 11 et au panneau central 4.

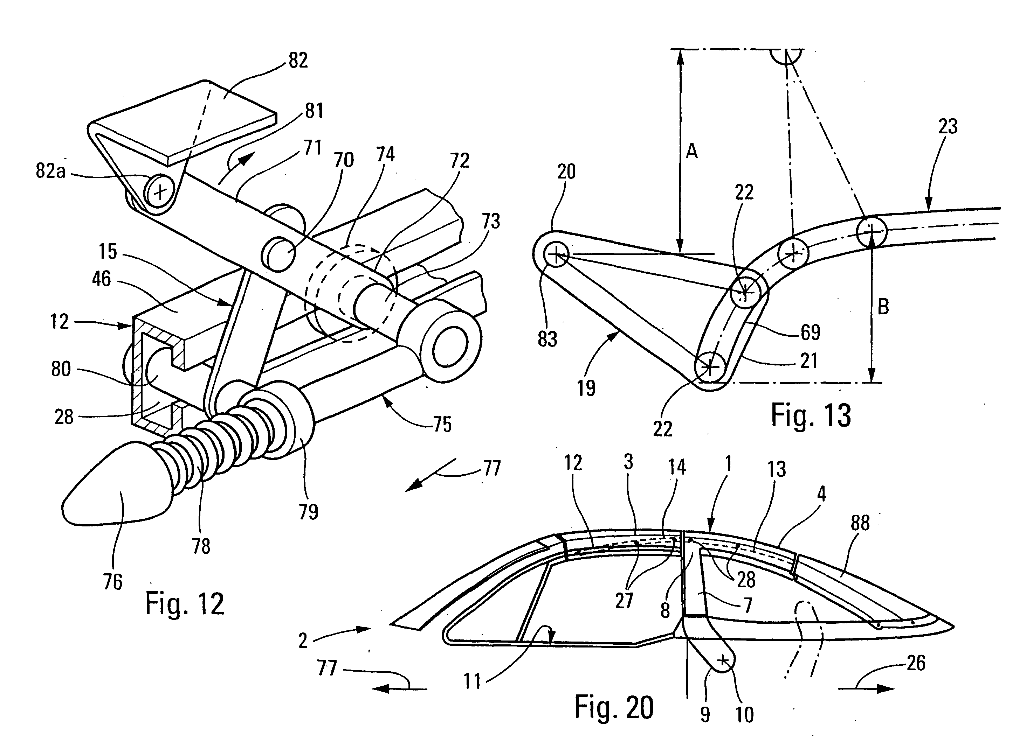

Comme schématisé à la figure 13, la glissière de guidage 23 a, à son extrémité avant 69 une partie courbe s'étendant vers le haut et vers l'arrière du véhicule, avec une concavité tournée vers le bas, pour soulever l'arrière 18 du panneau avant 3 au-dessus de l'extrémité avant 38 du panneau central 4 dès le début du coulissement vers le sens 26 de l'arrière du panneau avant 3.

on a représenté aux figures 12 et 13 un mode de réalisation de la première patte avant 15 et de la seconde patte arrière 19 du panneau avant 3 correspondant au cas où ledit panneau avant 3 doit s'élever de façon importante au-dessus du panneau central 4 et du châssis 11 du véhicule, cas qui sera explicité ci-dessous en liaison avec les figures 14 à 16.

Dans la réalisation de la figure 12, la première patte 15 montée à l'avant 17 du panneau avant 3 fait partie d'un assemblage géométrique déformable, actionné par exemple par ressort, pour soulever l'avant 17 du panneau avant 3 au-dessus de la glissière avant 12 dès le début du coulissement vers l'arrière dudit panneau avant 3.

Dans cette réalisation, la première patte avant 15 est reliée de manière pivotante à un pivot 70 sensiblement à mi-hauteur d'un levier 71 fixé à son extrémité inférieure 72 à un axe transversal 73 portant un galet 74 qui coulisse longitudinalement dans la rainure 28 de la glissière avant 12.

L'axe 73 est relié de manière pivotante à l'extrémité arrière d'un axe longitudinal 75 portant à son extrémité avant un doigt centreur 76 adapté à s'engager dans une gâche correspondante (non représentée) du châssis 11 du véhicule.

L'axe longitudinal 75 et le doigt centreur 76 sont sollicités en permanence dans le sens 77 vers l'avant par un ressort 78 comprimé entre le doigt centreur 76 et une bague annulaire 79 entourant de manière coulissante l'axe longitudinal 75 et solidaire de l'axe 80 reliant de manière pivotante l'extrémité inférieure 72 de la première patte 15 à l'extrémité avant 46 de la glissière avant 12.

Lorsque, dès le début de l'ouverture du panneau avant 3, la glissière avant 12 tire ledit panneau avant 3 dans le sens 26 vers l'arrière, l'axe longitudinal 75 poussé dans le sens vers l'avant 77 par le ressort 78, entraîne vers l'avant l'axe 73 en faisant pivoter le levier 71 autour du pivot 70, dans le sens de la flèche 81, le sens horaire à la figure 12, la première patte 15 pivotant dans le sens opposé. L'extrémité supérieure du levier 71 pivote autour de l'axe 82a porté par la cornière 82.

Cette déformation du triangle constituée par la première patte 15, le levier 71 et l'axe longitudinal 75, a pour résultat d'élever immédiatement, dès le début du coulissement du panneau avant 3 vers l'arrière, l'élément de cornière 82 fixé à l'extrémité avant 17 du panneau avant 3 pour élever cette extrémité 17 au-dessus du châssis 11 du véhicule.

Dans le mode de réalisation de la figure 13, la seconde patte 19 a en élévation une forme sensiblement triangulaire et comporte à son extrémité inférieure 21 deux axes 22 introduits dans la glissière de guidage 23. La patte 19, émergeant vers le haut par la rainure 24 de la glissière de guidage 23, comporte à son extrémité supérieure 20 un axe 83 relié de manière pivotante à l'extrémité arrière 18 du panneau avant 3.

On comprendra que l'on peut donner alors à la patte 19 la hauteur nécessaire pour soulever l'extrémité arrière 18 du panneau avant 3 de la hauteur A voulue au-dessus du panneau central 4, les deux axes 22 obligeant la base 21 de la seconde patte 19 à suivre sensiblement tangentiellement le profil courbe de l'extrémité avant 69 de la glissière de guidage 23. La hauteur A de la patte 19 s'ajoute à la hauteur B de l'extrémité 69 de la glissière 23.

Le mode de réalisation schématisé à la figure 14 correspond à la carrosserie d'un véhicule à deux places, avec une malle arrière 86. Les deux panneaux avant 3 et central 4 dans leur position superposée peuvent facilement pivoter dans le sens de la flèche 87 pour venir se ranger en position sensiblement verticale derrière les sièges des deux passagers.

Dans le mode de réalisation de la figure 15, on a représenté la carrosserie d'un véhicule à quatre places du genre coupé, la carrosserie comportant deux ou trois corps, avec une cote C variable suivant la capacité recherchée pour la malle arrière 86.

Dans ce mode de réalisation, le système de toit rétractable 1 comporte un troisième panneau arrière 88 placé, dans la position fermée du toit rétractable représentée à la figure, dans le prolongement du panneau central 4. Le système de toit rétractable comporte des moyens d'actionnement, par exemple des moyens pivotants, pour soulever le panneau arrière 88, dans le sens de la flèche 89, le sens horaire à la figure, pour permettre le pivotement du panneau central 4 dans le sens de la flèche 87, puis pour abaisser ledit panneau arrière 88 après ledit pivotement du panneau central 4 pour recouvrir le panneau central 4 dans sa position pivotée.

Dans le mode de réalisation de la figure 16, on a représenté une carrosserie de véhicule à quatre places, de type van, break ou monospace, du type à deux corps avec haillon. Un anneau arrière 90 est solidaire du châssis 11 et reçoit le haillon 91.

On voit dans ces trois figures 14 à 16 que les bras latéraux 7 ont de préférence une forme en col de cygne qui dégage au maximum la visibilité des passagers par les glaces arrière du véhicule sans limiter le mouvement de pivotement du panneau central 4. La forme exacte du col de cygne a sa concavité tournée vers l'avant et peut être adaptée à chaque type de carrosserie.

Dans ces trois figures 14 à 16, c'est le toit complet qui est rétractable, chaque panneau 3, 4 comprenant les renforts latéraux et transversaux nécessaires pour assurer la rigidité du châssis 11 du véhicule 2 dans la configuration toit fermé, et une liaison étanche avec le pare-brise et les glaces latérales.

Le verrouillage décrit ci-dessus du panneau avant 3 par rapport au châssis 11 et au panneau central 4 est nécessaire dans la position fermée du toit.

Dans la réalisation des figures 17 à 19, et pour des questions de rigidité de la structure constituée par la carrosserie du véhicule, des brancards latéraux 92 disposés de part et d'autre du système de toit découvrable 1 font partie intégrante du châssis 11 du véhicule. Il en est de même de la traverse de pare-brise et de la traverse arrière (non représentés).

Les seuls panneaux mobiles sont donc les panneaux situés entre ces brancards latéraux 92.

Dans le mode de réalisation de la figure 17, le système de toit ouvrant 1 comprend un panneau arrière 88, par exemple pivotant par rapport au châssis 11. Dans ce cas, l'accès au coffre arrière du véhicule se fait par un couvercle de malle arrière 93.

Le mode de réalisation de la figure 18 est d'une manière générale semblable à celui de la figure 17. Toutefois, il n'y a pas de panneau arrière 88 pivotant. L'accès au coffre arrière se fait par un haillon 94.

Le mode de réalisation de la figure 19 correspond à un type de carrosserie tel que schématisé à la figure 16, avec un anneau arrière 90 recevant un haillon 91. Des brancards latéraux 92 font partie du châssis, et le système de toit ouvrant comprend les deux panneaux 3 et 4 comme dans la réalisation de la figure 18.

Dans la réalisation de la figure 20, le toit rétractable comprend les trois panneaux avant 3, central 4 et arrière 88. Les bras latéraux 7 constituent un arceau 95 supportant le panneau central.

On a ainsi décrit une structure de toit rétractable simple et fiable adaptable à de nombreux types quelconques de carrosserie de véhicules ou de structure fixe ou mobile.

Bien entendu, la présente invention n'est pas limitée aux modes de réalisation que l'on vient de décrire, et on peut apporter à ceux-ci de nombreux changements et modifications pourvu que l'on ne sorte pas du domaine de l'invention, qui est defini par les revendications.

## Revendications

1. Système de toit rétractable (1) pour structure fixe ou mobile notamment pour véhicule (2), ce toit (1) étant constitué d'au moins deux panneaux rigides, respectivement un premier panneau avant (3) et un second panneau central (4), solidarisés l'un à l'autre par des moyens coulissants (5) agencés de manière telle que le panneau avant (3) est mobile entre une position fermée, dans laquelle il recouvre l'habitacle (6), et une position ouverte dans laquelle il est, après coulissement vers l'arrière, superposé au panneau central (4), le panneau central (4) étant monté de manière pivotante, sur des bras latéraux (7) fixés chacun à une extrémité (8) au panneau central (4) et à l'autre extrémité (9) à un point d'articulation (10) fixé au châssis (11) du véhicule (2), le panneau central (4) étant adapté à pivoter, en entraînant le panneau avant (3) qui lui est superposé, entre une position fermée, dans laquelle il recouvre l'habitacle (6), et une position ouverte dans laquelle le panneau avant (3) et le panneau central (4) sont logés, dans leur position superposée, sensiblement à la verticale derrière l'habitacle (6) du véhicule (2), les moyens coulissants (5) comprenant une glissière avant (12) solidaire du panneau avant (3), une glissière arrière (13) solidaire du panneau central (4), et une glissière intermédiaire (14) reliée de manière coulissante par l'intermédiaire de galets (27, 29) et de gorges (28, 30) à la fois à la glissière avant (12) et à la glissière arrière (13), des moyens d'entraînement (25) étant prévus pour faire coulisser la glissière avant (12) par rapport à la glissière intermédiaire (14), d'une part, et la glissière intermédiaire (14) par rapport à la glissière arrière (13), d'autre part, **caractérisé en ce que** le panneau avant (3) est relié à la glissière avant (12) par une première patte (15) solidaire de l'avant (17) du panneau (3) et fixée de manière pivotante à l'avant de la glissière avant (12), et porte à son extrémité arrière (18) une seconde patte (19) solidaire dudit panneau avant (3) et portant un axe (22) reçu de manière coulissante dans une glissière de guidage (23) portée par le panneau central (4) et ouverte vers le haut, et **en ce que** les première et seconde pattes (15, 19), les glissières avant, intermédiaire et arrière (12, 14, 13) et la glissière de guidage (23) sont conformées pour faire coulisser le panneau avant (3) vers l'arrière par dessus le panneau central (4), les moyens d'entraînement (25) assurant ledit coulissement relatif des glissières (12, 13, 14) de préférence en même temps et à la même vitesse relative.

2. Système de toit rétractable (1) selon la revendication 1, **caractérisé en ce que** les glissières avant (12), intermédiaire (14) et arrière (13) ont sensiblement la même longueur et **en ce que** la glissière intermédiaire (14) porte d'un côté, deux galets(27) situés dans sa moitié avant et adaptés à rouler dans une gorge (28) de la glissière avant (12), et de l'autre côté deux galets (29) situés dans sa moitié arrière et adaptés à rouler dans une gorge (30) de la glissière arrière (13).

3. Système de toit rétractable (1) selon les revendications 1 ou 2, **caractérisé en ce que** les moyens d'entraînement (25) comprennent un pignon moteur (31) entraînant une crémaillère (32) portée par la glissière intermédiaire (14), et de préférence un dispositif (33), porté par la glissière intermédiaire (14), à câble ou chaîne sans fin (34) s'enroulant entre deux patins (35, 36) portés par ladite glissière (14) et dont deux points (37, 39) sensiblement opposés sont fixés, l'un à l'avant (38) du panneau central (4), l'autre à l'arrière (18) du panneau avant (3).

4. Système de toit rétractable (1) selon l'une quelconque des revendications précédentes, **caractérisé en ce que** les glissières (12, 13, 14) ont un profil circulaire de même rayon, de préférence sensiblement plus petit que le rayon moyen du toit (1) dans sa position fermée.

5. Système de toit rétractable (1) selon l'une quelconque des revendications précédentes, **caractérisé en ce que** le panneau central (4) comporte des moyens de verrouillage (48) pour verrouiller le panneau central (4) au châssis (11) du véhicule (2).

6. Système de toit rétractable (1) selon la revendication 5, **caractérisé en ce que** les moyens de verrouillage (48) comprennent au moins un doigt de verrouillage (49) pressé dans sa position verrouillée sortie transversalement vers l'extérieur du véhicule (2), par exemple par la glissière intermédiaire (14) contre l'action d'un ressort de rappel (50), pour interdire le pivotement du panneau central (4) si le panneau avant (3) n'est pas dans sa position ouverte, et **en ce que** de préférence la glissière intermédiaire (14) comporte à son extrémité avant (51) un élément en biseau (52) autorisant le retrait du doigt (49) hors de sa position de verrouillage lorsque la glissière intermédiaire (14) est dans sa position vers l'arrière dans laquelle le panneau avant (3) est dans sa position ouverte.

7. Système de toit rétractable (1) selon l'une quelconque des revendications précédentes, **caractérisé en ce que** la glissière de guidage (23) a à son extrémité avant (69) une partie courbe s'étendant vers le haut et vers l'arrière pour soulever l'arrière (18) du panneau avant (3) au-dessus du panneau central (4) dès le début du coulissement vers l'arrière dudit panneau avant (3).

8. Système de toit rétractable selon la revendication 7, **caractérisé en ce que** la seconde patte (19) montée à l'arrière (18) du panneau avant (3) comporte au moins deux axes (22) engagés dans la glissière de guidage (23) et fixés à une base (21) qui suit sensiblement tangentiellement le profil de la glissière de guidage (23).

9. Système de toit rétractable selon l'une quelconque des revendications précédentes, **caractérisé en ce que** la première patte (15) montée à l'avant (17) du panneau avant (3) fait partie d'un assemblage géométrique déformable (15, 71, 75), actionné par exemple par ressort (78), pour soulever l'avant (17) du panneau avant (3) au-dessus de la glissière avant (12) dès le début du coulissement vers l'arrière (18) dudit panneau avant (3).

10. Système de toit rétractable selon l'une quelconque des revendications précédentes, **caractérisé en ce qu'**il comporte un troisième panneau arrière (88) placé, dans la position fermée du toit rétractable (1), dans le prolongement du panneau central (4), et des moyens d'actionnement pour soulever ledit panneau arrière (88) pour permettre le pivotement du panneau central (4), et pour abaisser ledit panneau arrière (88) après ledit pivotement.

11. Système de toit rétractable selon l'une quelconque des revendications précédentes, **caractérisé en ce que** les bras latéraux (7) ont une forme en col de cygne à concavité tournée vers l'avant pour dégager au maximum la visibilité.

## Claims

1. Retractable roof system (1) for a fixed or moving structure, particularly for a vehicle (2), this roof (1) consisting of at least two rigid panels, namely a front first panel (3) and a central second panel (4) which are joined together by sliding means (5) arranged in such a way that the front panel (3) can move between a closed position in which it covers the cabin (6) and an open position in which, once it has slid backwards, it is superposed with the central panel (4), the central panel (4) being mounted so that it can pivot, on lateral arms (7) each fixed at one end (8) to the central panel (4) and at the other end (9) to an articulation point (10) fixed to the chassis (11) of the vehicle (2), the central panel (4) being able to pivot, taking with it the front panel (3) superposed with it, between a closed position in which it covers the cabin (6) and an open position in which the front panel (3) and the central panel (4) are housed, in their superposed position, more or less vertically behind the cabin (6) of the vehicle (2), the sliding means (5) comprising a front slideway (12) secured to the front panel (3), a rear slideway (13) secured to the central panel (4), and an intermediate slideway (14) connected with sliding via rollers, (27, 29) and grooves (28, 30) to both the front slideway (12) and the rear slideway (13), drive means (25) being provided to cause the front slideway (12) to slide with respect to the intermediate slideway (14), on the one hand, and to cause the intermediate slideway (14) to slide with respect to the rear slideway (13) on the other, **characterized in that** the front panel (3) is connected to the front slideway (12) by a first tab (15) secured to the front (17) of the panel (3) and fixed with pivoting to the front of the front slideway (12) and bears at its rear end (18) a second tab (19) secured to the said front panel (3) and bearing a pin (22) received with sliding in a guide slideway (23) borne by the central panel (4) and open at the top, and **in that** the first and second tabs (15, 19), the front, intermediate and rear slideways (12, 14, 13) and the guide slideway (23) are shaped in such a way as to cause the front panel (3) to slide backwards over the top of the central panel (4), the drive means (25) causing the said relative sliding of the slideways (12, 13, 14) preferably at the same time and at the same relative speed.

2. Retractable roof system (1) according to Claim 1, **characterized in that** the front (12), intermediate (14) and rear (13) slideways have roughly the same length and **in that** the intermediate slideway (14) bears, on one side, two rollers (27) situated in its front half and designed to roll along a groove (28) of the front slideway (12), and, on the other side, two rollers (29) situated in its rear half and designed to roll along a groove (30) of the rear slideway (13).

3. Retractable roof system (1) according to Claims 1 or 2, **characterized in that** the drive means (25) comprise a drive pinion (31) driving a rack (32) borne by the intermediate slideway (14), and preferably a device (33), borne by the intermediate slideway (14), involving an endless cable or chain (34) wound between two runners (35, 36) borne by the said slideway (14) and of which two roughly opposed points (37, 39) are fixed, one of them to the front (38) of the central panel (4) and the other to the rear (18) of the front panel (3).

4. Retractable roof system (1) according to any one of the preceding claims, **characterized in that** the slideways (12, 13, 14) have a circular profile with the same radius, preferably appreciably smaller than the mean radius of the roof (1) in its closed position.

5. Retractable roof system (1) according to any one of the preceding claims, **characterized in that** the central panel (4) comprises locking means (48) for locking the central panel (4) to the chassis (11) of the vehicle (2).

6. Retractable roof system (1) according to Claim 5, **characterized in that** the locking means (48) comprise at least one locking finger (49) pressed in its deployed locked position transversely towards the outside of the vehicle (2), for example by the intermediate slideway (14) against the action of a return spring (50) so as to prevent the central panel (4) from pivoting if the front panel (3) is not in its open position, and **in that** the intermediate slideway (14) preferably comprises, at its front end (51), a chamfered element (52) allowing the finger (49) to be withdrawn from its locked position when the intermediate slideway (14) is in its rearwards position in which the front panel (3) is in its open position.

7. Retractable roof system (1) according to any one of the preceding claims, **characterized in that** the guide slideway (23) has, at its front end (69), a curved part extending upwards and backwards to lift the rear (18) of the front panel (3) over the central panel (4) as soon as the said front panel (3) begins to slide backwards.

8. Retractable roof system according to Claim 7, **characterized in that** the second tab (19) mounted at the rear (18) of the front panel (3) has at least two pins (22) engaged in the guide slideway (23) and fixed to a base (21) which more or less tangentially follows the profile of the guide slideway (23).

9. Retractable roof system according to any one of the preceding claims, **characterized in that** the first tab (15) mounted at the front (17) of the front panel (3) forms part of a deformable geometric assembly (15, 71, 75) actuated for example by a spring (78), to lift the front (17) of the front panel (3) over the front slideway (12) as soon as the said front panel (3) begins to slide towards the rear (18).

10. Retractable roof system according to any one of the preceding claims, **characterized in that** it comprises a rear third panel (88) placed, when the retractable roof (1) is in the closed position, in the continuation of the central panel (4), and actuating means for lifting the said rear panel (88) to allow the central panel (4) to pivot, and for lowering the said rear panel (88) once the said pivoting has occurred.

11. Retractable roof system according to any one of the preceding claims, **characterized in that** the lateral arms (7) have a gooseneck shape, with the concave side facing forwards to keep visibility as unobscured as possible.

## Patentansprüche

1. Versenkbares Dachsystem (1) für einen festen oder beweglichen Aufbau, insbesondere für Fahrzeuge (2), wobei dieses Dach aus zumindest zwei steifen Platten besteht, und zwar jeweils einer ersten vorderen Platte (3) und einer zweiten zentralen Platte (4), welche einstückig miteinander ausgebildet sind durch Gleitvorrichtungen (5), die derart gelenkig angebracht sind, dass die vordere Platte (3) beweglich ist zwischen einer geschlossenen Position, in welcher sie den Insassenraum (6) abdeckt, und einer offenen Position, in welcher sie nach dem Gleiten nach hinten über der zentralen Platte (4) liegt, wobei die zentrale Platte (4) schwenkbar auf Seitenarmen (7) angebracht ist, welche jeweils mit einem Ende (8) an der zentralen Platte (4) und mit dem anderen Ende (9) an einem an dem Chassis (11) des Fahrzeugs (2) befestigten Gelenk (10) befestigt sind, wobei die zentrale Platte (4) dafür eingerichtet ist, unter Mitnahme der über ihr liegenden vorderen Platte (3) zu schwenken zwischen einer geschlossenen Position, in welcher sie den Insassenraum (6) abdeckt, und einer offenen Position, in welcher die vordere Platte (3) und die zentrale Platte (4) in ihrer übereinander gelegten Position praktisch in der Vertikalen hinter dem Insassenraum (6) des Fahrzeugs (2)-gelagert sind, wobei die Gleitvorrichtungen (5) eine mit der vorderen Platte (3) einstückig ausgebildete vordere Gleitschiene (12), eine einstückig mit der zentralen Platte (4) ausgebildete hintere Gleitschiene (13) und eine Mittelgleitschiene (14) aufweisen, welche gleitend mittels Reibrollen (27, 29) und Rillen (28, 30) zugleich mit der vorderen Gleitschiene (12) und mit der hinteren Gleitschiene (13) verbunden ist, wobei Antriebsvorrichtungen (25) vorgesehen sind, um einerseits die vordere Gleitschiene (12) bezüglich der Mittelgleitschiene (14) und andererseits die Mittelgleitschiene (14) bezüglich der hinteren Gleitschiene (13) gleiten zu lassen, **dadurch gekennzeichnet, dass** die vordere Platte (3) mit der vorderen Gleitschiene (12) über eine erste Befestigungsklammer (15) verbunden ist, die einstückig mit dem vorderen Bereich (17) der Platte (3) ausgebildet und schwenkbar an dem vorderen Bereich der vorderen Gleitschiene (12) befestigt ist, und wobei die Platte an ihrem hinteren Ende (18) eine zweite Befestigungsklammer (19) trägt, die einstückig mit der vorderen Platte (3) ausgebildet ist, und die eine Achse trägt, welche gleitend in einer von der zentralen Platte (4) getragenen und nach oben hin offenen Führungsschiene (23) aufgenommen wird, und dass die erste und zweite Befestigungsklammer (15, 19), die vordere, mittlere und hintere Gleitschiene (12, 14, 13) und die Führungsschiene (23) dafür eingerichtet sind, die vordere Platte (3) nach hinten über die zentrale Platte (4) gleiten zu lassen, wobei die Antriebsvorrichtungen (25) das relative Gleiten der Gleitschienen (12, 13, 14), vorzugsweise zur gleichen Zeit und mit der gleichen relativen Geschwindigkeit sicherstellen.

2. Versenkbares Dachsystem (1) gemäß Anspruch 1, **dadurch gekennzeichnet, dass** die vordere (12), mittlere (14) und hintere (13) Gleitschiene praktisch die gleiche Länge aufweisen, und dass die Mittelgleitschiene (14) auf der einen Seite zwei in ihrer vorderen Hälfte angeordnete Reibrollen (27) trägt, die dafür eingerichtet sind, in einer Rille (28) der vorderen Gleitschiene (12) zu rollen, und auf der anderen Seite zwei in ihrer hinteren Hälfte angeordnete Reibrollen (29), die dafür eingerichtet sind, in einer Rille (30) der hinteren Gleitschiene (13) zu rollen.

3. Versenkbares Dachsystem (1) gemäß den Ansprüchen 1 oder 2, **dadurch gekennzeichnet, dass** die Antriebsvorrichtungen (25) ein Antriebsritzel (31) aufweisen, das eine von der Mittelgleitschiene (14) getragene Zahnstange antreibt, und vorzugsweise eine von der Mittelgleitschiene (14) getragene Vorrichtung (33) mit einem Endlosseil oder einer Endloskette (34), die zwischen zwei von der Gleitschiene (14) getragenen Gleitkufen (35, 36) abrollt, von denen zwei praktisch einander gegenüberliegende Punkte (37, 39) zum einen am vorderen Bereich (38) der zentralen Platte (4) und zum anderen am hinteren Bereich (18) der vorderen Platte (3) befestigt sind.

4. Versenkbares Dachsystem (1) gemäß irgendeinem der vorherigen Ansprüche, **dadurch gekennzeichnet, dass** die Gleitschienen (12, 13, 14) ein kreisförmiges Profil mit gleichem Radius aufweisen, der vorzugsweise deutlich kleiner ist als der mittlere Radius des Daches (1) in seiner geschlossenen Position.

5. Versenkbares Dachsystem (1) gemäß irgendeinem der vorherigen Ansprüche, **dadurch gekennzeichnet, dass** die zentrale Platte (4) Verrieglungsvorrichtungen (48) zum Verriegeln der zentralen Platte (4) an dem Chassis (11) des Fahrzeugs (2) aufweist.

6. Versenkbares Dachsystem (1) gemäß Anspruch 5, **dadurch gekennzeichnet, dass** die Verriegelungsvorrichtungen (48) zumindest einen Verriegelungszapfen (49) aufweisen, der in seiner verriegelten Position, in welcher er quer nach außen von dem Fahrzeug (2) ausgefahren ist, beispielsweise von der Mittelgleitschiene (14) gegen die Wirkung einer Rückstellfeder (50) gepresst wird, um das Schwenken der zentralen Platte (4) zu verhindern, wenn sich die vordere Platte (3) nicht in ihrer offenen Position befindet, und dass die Mittelgleitschiene (14) vorzugsweise an ihrem vorderen Ende (51) ein abgeschrägtes Element (52) aufweist, welches das Zurückziehen des Zapfens (49) aus seiner Verriegelungsposition ermöglicht, wenn sich die Mittelgleitschiene (14) in ihrer nach hinten geschobenen Position befindet, in welcher sich die vordere Platte (3) in ihrer offenen Position befindet.

7. Versenkbares Dachsystem (1) gemäß irgendeinem der vorherigen Ansprüche, **dadurch gekennzeichnet, dass** die Führungsschiene (23) an ihrem vorderen Ende (69) einen gebogenen Bereich aufweist, der sich nach oben und nach hinten erstreckt, um den hinteren Bereich (18) der vorderen Platte (3) von Beginn der Gleitbewegung nach hinten der vorderen Platte (3) an über die zentrale Platte (4) zu heben.

8. Versenkbares Dachsystem gemäß Anspruch 7, **dadurch gekennzeichnet, dass** die am hinteren Bereich (18) der vorderen Platte (3) angebrachte zweite Befestigungsklammer (19) wenigstens zwei Achsen (22) aufweist, die in die Führungsschiene (23) eingegriffen und an einer Basis (21) befestigt sind, die praktisch tangential dem Profil der Führungsschiene (23) folgt.

9. Versenkbares Dachsystem gemäß irgendeinem der vorherigen Ansprüche, **dadurch gekennzeichnet, dass** die am vorderen Ende (17) der vorderen Platte (3) angebrachte erste Befestigungsklammer (15) Teil einer verformbaren geometrischen Anordnung (15, 71, 75) ist, die beispielsweise über eine Feder (78) betätigt wird, um den vorderen Bereich (17) der vorderen Platte (3) von Beginn der Gleitbewegung nach hinten (18) der vorderen Platte (3) an über die vordere Gleitschiene (12) zu heben.

10. Versenkbares Dachsystem gemäß irgendeinem der vorherigen Ansprüche, **dadurch gekennzeichnet, dass** es eine dritte hintere Platte (88) aufweist, die in der geschlossenen Position des versenkbaren Daches (1) in der Verlängerung der zentralen Platte (4) angeordnet ist, und Betätigungsvorrichtungen. um die hintere Platte (88) zur Ermöglichung der Schwenkbewegung der zentralen Platte (4) anzuheben und die hintere Platte (88) nach der Schwenkbewegung abzusenken.

11. Versenkbares Dachsystem gemäß irgendeinem der vorherigen Ansprüche, **dadurch gekennzeichnet, dass** die Seitenarme (7) eine C-Gestellform aufweisen mit einer nach vorne gerichteten Konkavität, um eine maximale Sicht freizugeben.
